# EUROPEAN PATENT APPLICATION

(11) **EP 1 220 456 A2**
(43) Date of publication of application: **03.07.2002**
(21) Application number: 01660248.4
(22) Date of filing: 21.12.2001
(51) Int. Cl.: H04B 1/04, H04B 1/40, H04B 1/18

(54) **Arrangement for antenna matching**

(30) Priority: 29.12.2000 FI 20002882
(71) Applicant: Nokia Corporation, 02150 Espoo (FI)
(72) Inventor: Leipälä, Pasi, 90100 Oulu (FI)
(74) Representative: Kupiainen, Juhani

(57) **Abstract**

The invention relates to an arrangement for matching transmitting antennas in mobile stations, especially in mobile stations applying new transmission technologies, as well as to an arrangement for protecting a power amplifier feeding an antenna. In order to match an antenna (260), the strength of the field (re) reflected from the antenna is continually measured. The measurement data is used in controlling an antenna matching circuit (250) so that the strength of the reflected field is minimized. The measurement is carried out using a circulator (220) which also provides isolation, i.e. prevents the field reflected from the antenna from propagating back to the power amplifier (PA). In a multi-band apparatus, the band in use is also taken into account in the matching. The structure according to the invention saves space, as the number of relatively large components becomes smaller. Furthermore, the attenuation of the transmission path to the antenna is reduced compared to corresponding structures according to the prior art.

## Description

The invention relates to an arrangement for matching transmitting antennas in mobile stations, especially in mobile stations applying new transmission technologies. The invention also relates to an arrangement for protecting a power amplifier feeding an antenna.

Matching the impedance of a transmitting antenna to the transmitter of a radio apparatus is a normal arrangement in transmission technology. By means of matching, the radiation power of the antenna can be made as high as possible in relation to the power of the power amplifier feeding the antenna. The poorer the matching of the antenna, the greater the strength of the field reflected from the antenna towards the power amplifier in relation to the strength of the field propagating towards the antenna. The strength of the reflected field can be measured using e.g. a directional coupler which is a part of the feed line of the antenna. On the basis of the reflection information the power amplifier can be switched off altogether if the reflected energy threatens to destroy the power amplifier as a result of antenna damage. The directional coupler may also be used to measure the transmitting power of the antenna for the purpose of power control.

The antenna matching arrangement is usually fixed. If, in such a case, the impedance of the antenna changes e.g. because of a conductive object placed near the antenna, the matching cannot be adjusted accordingly, which degrades the performance of the antenna. The matching may also be realized in an adjustable manner using electrically controlled reactance circuits. In that case the information concerning the strength of the field reflected from the antenna can be utilized in controlling the matching circuit so that the matching of the antenna remains at all times as good as possible.

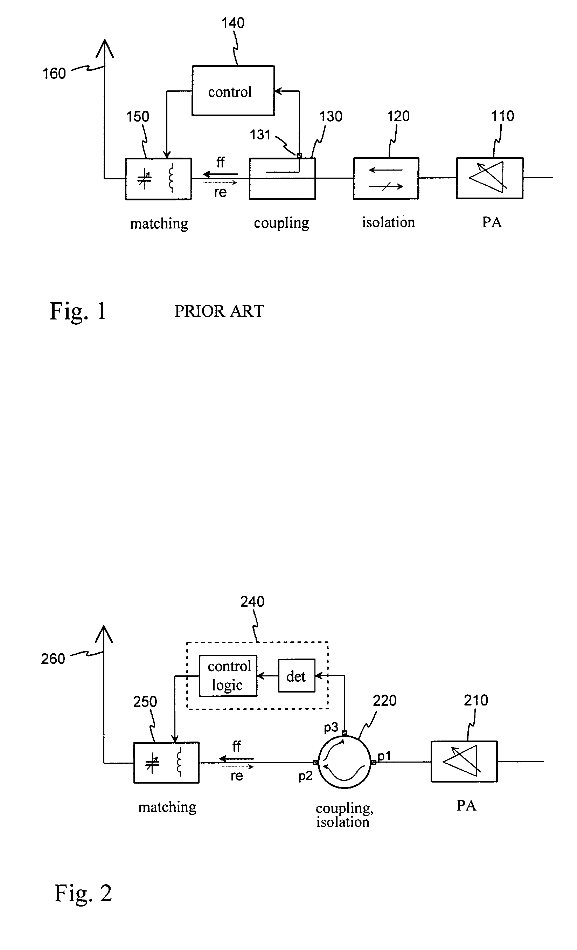

An arrangement of such adaptive antenna matching in accordance with Fig. 1 is known from the prior art. Fig. 1 shows connected in series in the direction of the propagation of the signal, a power amplifier 110, isolator 120, directional coupler 130, matching circuit 150 and an antenna 160. The matching of an antenna can never be perfect, so a certain part **re** is returned of the propagating field **ff.** In the directional coupler, port 131 is used where there appears a radio-frequency voltage proportional to the reflected field **re**. Port 131 is connected to a control unit 140 the output of which is in turn connected to the control input of the matching circuit 150. The control unit comprises a detector and control logic. The matching circuit is comprised of capacitive and inductive elements, some of which, at least, are controllable. Changing of a certain impedance may be based on e.g. the use of highfrequency switches or altering the junction capacitance of a diode. If the strength of the reflected field **r**e exceeds a certain threshold, the control logic changes the control of the matching circuit 150. The fault may be caused by the fact that the impedance of the antenna, which originally was in resonance, is changed by an external factor in either capacitive or inductive direction. The change of the voltage of port 131 does not reveal the direction of the error, whereby the control logic has to be built such that it searches the matching adjustment with the right direction. The feedback depicted here keeps the strength of the reflected field **re**, which represents the antenna mismatch, below a predetermined threshold.

The isolator 120 in Fig. 1 attenuates the field propagating towards the antenna only a little, but prevents the reflected field from returning to the power amplifier. The isolator is useful when applying EDGE (Enhanced Data Rates for Global Evolution) and WCDMA (Wideband Code Division Multiple Access) technologies, for instance.

A disadvantage in the arrangement according to Fig. 1 is the number of units required in it. Separate directional coupler and isolator take an unpractical amount of space and cause extra attenuation.

An object of the invention is to reduce disadvantages associated with the prior art. An arrangement according to the invention is characterized by features specified in the independent claim 1. Some preferred embodiments of the invention are specified in the other claims.

The basic idea of the invention is as follows: For continuous antenna impedance matching, strength of the field reflected from the antenna is measured. The measuring information is used in controlling a matching circuit of the antenna so that the strength of the reflected field is minimized. The measuring is carried out using a circulator which also provides isolation, i.e. prevents the field reflected from the antenna from propagating back to the power amplifier. In a multi-band apparatus, the band used is also taken into account in the matching.

An advantage of the invention is that the structure according to the invention saves space since the number of relatively large components is smaller than in corresponding prior-art structures. An extra advantage caused by the smaller number of components is that the attenuation of the transmission path to the antenna is smaller than in prior-art structures and, furthermore, production costs are lower.

The invention is described more closely in the following. Reference is made to the accompanying figures in which
- Fig. 1: shows an arrangement according to the prior art,
- Fig. 2: shows an example of the arrangement according to the invention,
- Fig. 3: shows a second example of the arrangement according to the invention, and
- Fig. 4: shows an example of a mobile station equipped with an antenna end according to the invention.

Fig. 1 was already discussed in connection with the description of the prior art.

Fig. 2 shows an example of the matching and attenuating arrangement according to the invention. There are, connected in series, in the direction of the propagation of the signal, a radio-frequency power amplifier 210, a circulator 220, a matching circuit 250 and an antenna 260. In addition the structure includes a control unit 240 controlling the matching circuit. The matching adjustment principle is the same as in the known structure according to Fig. 1: The reactance of at least one capacitive or inductive element in the matching circuit is changed in order to minimize the strength of the field reflected from the antenna. The variable capacitance may be realized using a conventional capacitance diode or e.g. MEMS (Microelectro-Mechanical System) switches, which are known per se, and capacitors with a relatively high Q factor. The capacitances to be utilized may be included in the MEMS switch structure itself, in which case there are no separate capacitors. Let such a variable component be called a MEMS capacitor. The difference from the structure of Fig. 1 is that the directional coupler and isolator are replaced by a single component, namely the circulator 220. A circulator is a waveguide having e.g. three or four ports. The shape of the waveguide and the piece of ferrite inside it give the variable fields propagating in the waveguide phase shifts such that a field fed into a given port can only leave through a certain other port but not through the rest of the ports. This is realized in a circulatory manner: For example, the circulator in Fig. 2 has three ports. A field fed into a first port **p1** can go out only through a second port **p2,** a field fed into the second port can only go out through a third port **p3**, and a field fed into the third port can only go out through the first port. In practice there is naturally a small leakage in the prohibited direction, but the attenuation in that direction is, however, several tens of decibels.

In Fig. 2, an output of the power amplifier 210 is connected to the first port **p1** of the circulator, and the second port **p2** is connected to the matching circuit, so a relatively high-power signal **ff** can go to the antenna via this route. The third port **p3** of the circulator is connected to an input of the control unit 240. A field **re** reflected from the antenna is thus directed almost unattenuated through ports p2 and p3 to the control unit where a field strength detector produces a voltage proportional to it. The reflected field **re**, however, cannot return through the first port to the power amplifier, so the circulator 220 also provides isolation.

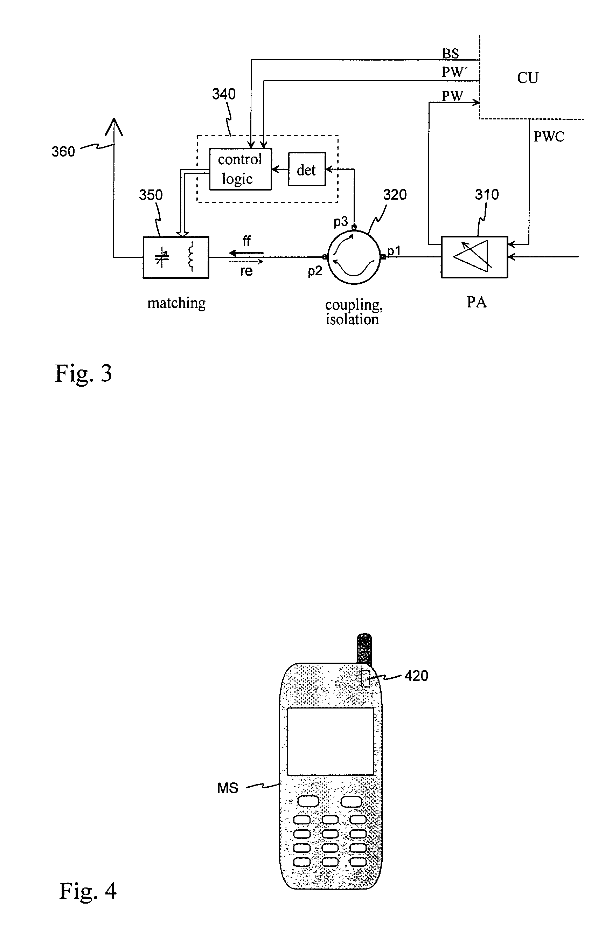

Fig. 3 shows a second example of the matching and attenuating arrangement according to the invention. There are, connected in series, in the direction of the propagation of the signal, a radio-frequency power amplifier 310, a circulator 320, a matching circuit 350 and an antenna 360. In addition the structure includes a control unit 340 of the matching circuit. The difference from the structure of Fig. 2 is that the antenna matching adjustment is meant to function in more than one frequency band, say both in the GSM900 and GSM1800 systems. If there is a clear difference between the two alternative bands, as in the case of the GSM systems mentioned above, the antenna has to have two bands. A change in the resonating structure in the antenna may in that case require a substantial change in the matching circuit 350, too. To that end, a signal BS (Band Select) indicating the band in use is brought to the control unit 340 from the baseband control unit CU of the radio apparatus, as shown in Fig. 3.

Moreover, a signal PW' proportional to the output power of the power amplifier PA is brought to the control unit of the matching circuit from the control unit CU of the whole radio apparatus. This is used to determine the relative strength of the field re reflected from the antenna in order to generate a suitable control signal to the matching circuit. The signal PW' is obtained from the output power measurement signal PW generated in the power amplifier and used primarily for output power control for the purpose of keeping the radiation power of the antenna within the limits given in the specifications of the system in question. In Fig. 3, the output power of the power amplifier is controlled by means of a power control signal PWC generated in the control unit CU.

Fig. 4 shows a mobile station MS. It includes a component 420 according to the invention for separating the field reflected from the antenna to a path of its own and preventing the reflected field from entering the radio-frequency power amplifier.

Above solutions according to the invention were described. The invention does not limit the type of antenna used in the radio apparatus, nor the ways in which the adjustment of the matching is realized. Neither does the invention limit the method of implementation of the component for directing radio-frequency fields. The inventive idea can be applied in different ways within the limits defined by the independent claim 1.

## Claims

1. An arrangement for matching impedance of an antenna in a radio apparatus, the arrangement comprising a radio-frequency power amplifier, means for measuring a reflected field, a matching circuit, and a control unit for controlling the matching circuit at least on the basis of the strength of the reflected field, **characterized in that** said means for measuring the reflected field (re) comprises an element which separates the reflected field to a separate path and which is connected to an output of the power amplifier in the transmission path of the signal to be transmitted.

2. An arrangement according to claim 1, **characterized in that** said element which separates the reflected field to a separate path is a circulator (220; 320) arranged to direct the reflected field to the control unit (240; 340) and, furthermore, to prevent the reflected field from propagating to the power amplifier (210; 310).

3. An arrangement according to claim 1 or 2, **characterized in that** said control unit (240; 340) comprises a detector of the strength of a radio-frequency alternating field and control logic in order to change the impedance of the matching circuit.

4. An arrangement according to any one of the preceding claims, **characterized in that** said matching circuit (250; 350) comprises at least one part the reactance of which can be controlled electrically.

5. An arrangement according to any one of the preceding claims, where the radio apparatus functions in at least two systems, **characterized in that** said control unit (340) comprises means for controlling the matching circuit also on the basis of frequency band information (BS) of said systems.

6. An arrangement according to any one of the preceding claims, **characterized in that** said control unit (340) comprises means for controlling the matching circuit also on the basis of output power information (PW') of the power amplifier.

7. An arrangement according to claim 4, **characterized in that** said at least one part, the reactance of which can be controlled electrically, comprises at least one MEMS capacitor.

8. A mobile station (MS) comprising an antenna, an antenna matching circuit, a power amplifier feeding the antenna, means for measuring a field reflected from the antenna towards the power amplifier, means for attenuating the reflected field, and a control unit for controlling said matching circuit on the basis of the strength of the reflected field, **characterized in that** the means (420) for measuring the reflected field comprises an element which separates the reflected field to a separate path and which at the same time constitutes said means for attenuating the reflected field.
